# DEMANDE DE BREVET EUROPEEN

(11) **EP 3 335 946 A1**
(43) Date de publication de la demande: **20.06.2018**
(21) Numéro de dépôt: 17204054.5
(22) Date de dépôt: 28.11.2017
(51) Int. Cl.: B60S 1/38

(54) **ORGANE POUR UN SYSTÈME DE CONNEXION D'UN BALAI À UN BRAS D'ESSUIE-GLACE**

(30) Priorité: 15.12.2016 FR 1662558
(71) Demandeur: Valeo Systèmes d'Essuyage, 78322 Le Mesnil Saint Denis (FR)
(72) Inventeur: GIRONDE, Yvan, 63500 ISSOIRE (FR)
(74) Mandataire: Valeo Systèmes d'Essuyage

(57) **Abrégé**

L'invention concerne un organe (26, 26', 26") pour un système (16) de connexion d'un balai (12) à un bras (14) d'essuie-glace, cet organe, dit premier organe, étant configuré pour être solidarisé audit balai (12) ou audit bras (14) et comportant des moyens d'articulation (35, 35', 35") configurés pour coopérer avec des moyens d'articulation complémentaires (60) d'un autre organe (30) du système (16) de connexion, dit second organe, pour définir au moins un moyen de fixation et de pivotement autour d'un axe (Y) de rotation dudit premier organe (26, 26', 26") vis-à-vis dudit second organe (30), lesdits moyens d'articulation (35, 35', 35") dudit premier organe (26, 26', 26") comprenant une liaison rotule de forme au moins partiellement sphérique, ellipsoïdale ou ovoïdale, ledit premier organe (26, 26', 26") étant caractérisé en ce qu'il ne comprend qu'une seule et unique liaison rotule de forme au moins partiellement sphérique, ellipsoïdale ou ovoïdale.

## Description

### DOMAINE TECHNIQUE

La présente invention concerne un organe pour un système de connexion d'un balai à un bras d'essuie-glace.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames d'essuyage, autrement appelées lames racleuses et réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade*" (pour "balai plat"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est généralement rattaché au bras d'entraînement par un système de connexion comportant un connecteur et un adaptateur. Le connecteur est une pièce généralement fixée à demeure sur l'ensemble semi-rigide susmentionné du balai. L'adaptateur est une pièce intermédiaire d'adaptation qui permet la liaison et la fixation du connecteur sur le bras d'entraînement. Il est en général configuré pour être engagé dans une tête ou pièce terminale en forme de chape du bras d'entraînement.

Chacun de ces organes (connecteur et adaptateur) comprend des moyens de rotation configurés pour coopérer avec des moyens complémentaires de l'autre organe, pour définir au moins un axe de rotation des organes, qui est aussi un axe de rotation du balai vis-à-vis du bras. Dans la technique actuelle, l'un des organes, tels que le connecteur, comprend un axe de pivotement physique rapporté sensiblement cylindrique qui définit l'axe de rotation et qui est reçu dans un logement de forme complémentaire de l'autre organe.

On connaît aussi de l'art antérieur FR2453757A1 un balai d'essuie-glace comportant des étriers articulés comportant des moyens d'articulation sphériques aptes à s'encastrer dans des logements réalisés dans des étriers complémentaires, de façon telle à obtenir une articulation sans jeu entre lesdits étriers.

L'invention propose une alternative à ces technologies qui est simple, efficace et économique, et permette dans la mesure du nécessaire une plus grande liberté de mouvement au niveau de l'articulation par rapport à ces arts antérieurs.

### EXPOSE DE L'INVENTION

L'invention propose à cet effet un organe pour un système de connexion d'un balai à un bras d'essuie-glace, cet organe, dit premier organe, étant configuré pour être solidarisé audit balai ou audit bras et comportant des moyens d'articulation configurés pour coopérer avec des moyens d'articulation complémentaires d'un autre organe du système de connexion, dit second organe, pour définir au moins un moyen de fixation et de pivotement autour d'un axe Y de rotation dudit premier organe vis-à-vis dudit second organe, lesdits moyens d'articulation dudit premier organe comprenant une liaison rotule de forme au moins partiellement sphérique, ellipsoïdale ou ovoïdale, ledit premier organe étant caractérisé en ce qu'il ne comprend qu'une seule et unique liaison rotule de forme au moins partiellement sphérique, ellipsoïdale ou ovoïdale.

La présence d'une seule et unique rotule permet de simplifier le dispositif de l'art antérieur.

Par ailleurs, la présence d'une seule et unique rotule permet, lorsque cela est souhaité, d'introduire et d'ajuster des jeux longitudinaux et/ou latéraux entre ledit premier organe et ledit second organe, afin de pouvoir augmenter l'angle d'attaque de la lame d'essuyage aux positions de retournement de celle-ci (dites positions « d'arrêt fixe » et « d'opposé arrêt fixe », aussi appelées en anglais positions « inwipe » et « outwipe »). Cela évite par exemple d'avoir à recourir à une tête d'entraînement vrillée au niveau d'un arbre de sortie du moteur d'essuie-glace ou au niveau d'un arbre de sortie d'une timonerie d'essuie-glace.

Ledit premier organe selon l'invention peut comprendre une ou plusieurs des caractéristiques suivantes, prises isolément ou en combinaison les unes avec les autres :
- ladite liaison rotule de forme au moins partiellement sphérique, ellipsoïdale ou ovoïdale a en section une étendue angulaire (a, a', a") supérieure à 200°, voire à 250°, autour d'un centre (A) de ladite rotule ;
- ladite liaison rotule de forme au moins partiellement sphérique, ellipsoïdale ou ovoïdale comprend un orifice traversant s'étendant autour dudit axe de pivotement (Y) ;
- ledit premier organe comprend des moyens de guidage configurés pour coopérer avec ledit second organe afin de guider le second organe en rotation autour dudit axe (Y), lesdits moyens de guidage étant de préférence indépendants des moyens d'articulation ;
- ledit premier organe comprend des moyens de blocage configurés pour coopérer avec ledit second organe afin d'autoriser seulement des déplacements en rotation autour dudit axe (Y), lesdits moyens de blocage étant de préférence indépendants des moyens d'articulation ;
- ledit premier organe comprend des moyens de guidage et/ou de blocage qui comprennent au moins une paroi longitudinale sensiblement perpendiculaire audit axe de rotation (Y) ;
- ladite paroi longitudinale comprend ou porte des protubérances d'appui et de glissement faisant saillie, et configurés pour coopérer avec ledit second organe ;
- le dit premier organe a une forme allongée ;
- lesdits moyens de guidage et/ou de blocage s'étendent jusqu'à au moins une ou chaque extrémité longitudinale dudit premier organe ;
- lesdits moyens de guidage et/ou de blocage comprennent au moins une paroi longitudinale sensiblement perpendiculaire audit axe de rotation ;
- ledit premier organe comprend des moyens de fixation à au moins un élément du balai ou du bras ;
- ledit premier organe est un connecteur configuré pour être solidarisé directement audit balai ou un adaptateur configuré pour être solidarisé directement audit bras.

La présente invention concerne également un système de connexion d'un balai à un bras d'essuie-glace, ce système comprenant un premier organe selon l'une quelconque des définitions précédentes et un second organe selon l'une quelconque des définitions précédentes.

Selon une variante de réalisation, ledit système de connexion permet trois degrés de liberté (soit trois possibilités de rotation) du second organe sur ledit premier organe.

Selon une autre variante de réalisation, ledit système de connexion permet deux degrés de liberté (soit deux possibilités de rotation) du second organe sur ledit premier organe.

Selon une encore autre variante de réalisation, ledit système de connexion ne permet qu'un degré de liberté (soit une seule possibilité de rotation) du second organe sur ledit premier organe.

Avantageusement, ledit premier organe est un connecteur configuré être solidarisé audit balai, notamment à une ou plusieurs vertèbres de rigidification du balai.

De préférence, les moyens de rotation du premier organe sont montés dans des moyens complémentaires du second organe par encliquetage élastique.

La présente invention concerne encore un balai d'essuie-glace, caractérisé en ce qu'il comprend ou porte un premier organe ou un système selon l'une quelconque des définitions précédentes.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique partielle en perspective d'un essuie-glace, cet essuie-glace comportant un balai d'essuie-glace, un bras d'entraînement du balai, et un système de connexion du balai au bras,
- la figure 2 est une vue schématique en perspective agrandie des différents éléments du système de connexion selon un mode de réalisation de l'invention,
- la figure 3 est une autre vue schématique en perspective d'un premier organe selon le premier mode de réalisation de l'invention,
- la figure 4 est une vue schématique de côté de l'organe de la figure 3,
- la figure 5 est une vue schématique de dessus de l'organe de la figure 3,
- la figure 6 est une vue schématique de côté d'une première variante du premier organe de la figure 3,
- la figure 7 est une vue schématique de côté d'une deuxième variante du premier organe de la figure 3,
- la figure 8 est une vue schématique de dessus de l'organe de la figure 7,
- la figure 9 est une vue schématique en perspective et de dessus d'un deuxième organe selon l'invention,
- la figure 10 est une vue schématique en perspective et de dessous du second organe de la figure 9,
- la figure 11 est une vue en coupe selon un plan vertical longitudinal médian de l'organe de la figure 9.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuyage ou du bras d'entraînement, autrement appelé bras d'essuie-glace. La direction longitudinale correspond à l'axe principal du balai d'essuie-glace ou du bras d'essuie-glace dans lequel il s'étend, alors que les orientations latérales correspondent à des droites concourantes, c'est-à-dire qui croisent la direction longitudinale, notamment perpendiculaires à l'axe longitudinal du balai d'essuyage ou du bras d'essuie-glace dans son plan de rotation. Pour les directions longitudinales, les dénominations extérieure (ou avant) ou intérieure (ou arrière) s'apprécient par rapport au point de fixation du balai d'essuyage sur le bras d'essuie-glace, la dénomination intérieure correspondant à la partie où le bras d'essuie-glace et un demi-balai s'étendent. Enfin, les directions référencées comme supérieures ou inférieures correspondent à des orientations perpendiculaires au plan de rotation du balai d'essuyage d'essuie-glace sur le pare-brise, la dénomination inférieure contenant le plan du pare-brise.

Des références numériques identiques désignent des éléments semblables d'une figure à l'autre, et le signe prime (') est utilisé pour désigner des variantes d'un même élément dans différents modes de réalisation.

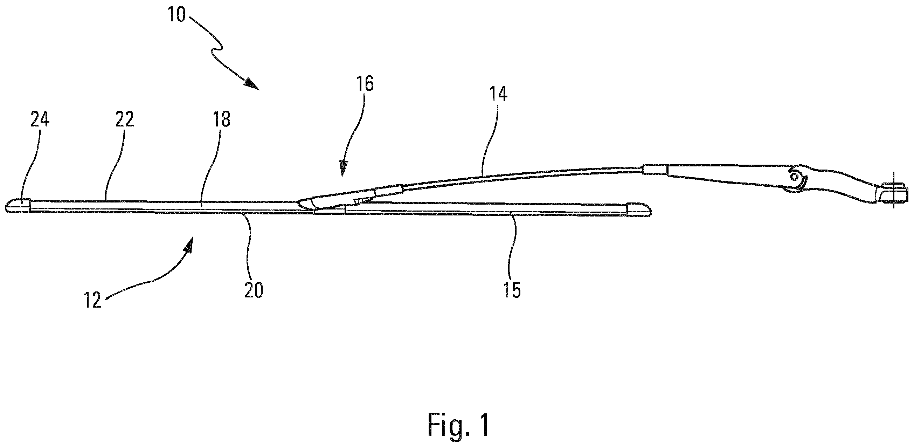

Les figures 1-5 et 9-11 représentent un premier mode de réalisation de l'invention.

On se réfère d'abord à la figure 1 qui montre un essuie-glace 10 dans son ensemble, cet essuie-glace 10 comportant un balai d'essuyage 12, un bras d'essuie-glace 14 (partiellement représenté) d'entraînement du balai d'essuyage 12, et un système 16 de connexion du balai d'essuyage 12 au bras d'essuie-glace 14.

Le bras d'essuie-glace 14 représenté est ici un bras de type « Pinch Tab » bien connu de l'homme du métier et mieux décrit dans le document EP1565359 A1. D'autres types de bras peuvent naturellement être utilisés dans le cadre de la présente invention.

Le bras d'essuie-glace 14 est destiné à être entraîné par un moteur pour suivre un mouvement angulaire de va-et-vient permettant d'évacuer l'eau et éventuellement d'autres éléments indésirables recouvrant le pare-brise.

Le balai d'essuyage 12 est de préférence du type balai plat. Il comprend par exemple un corps longitudinal 18, une lame d'essuyage 20 venue de matière du corps longitudinal 18 ou rapportée sur celui-ci, par exemple en caoutchouc, et au moins une vertèbre 15 qui rigidifie la lame 20 et favorise son application sur le pare-brise.

Le corps 18 du balai d'essuyage 12 peut avantageusement comporter un déflecteur aérodynamique 22 supérieur destiné à améliorer le fonctionnement de l'essuie-glace, le but de ce déflecteur 22 étant d'améliorer le plaquage du balai sur le pare-brise et donc la performance aérodynamique de l'essuie-glace.

Le balai d'essuyage 12 peut comprendre en outre des embouts 24 d'accrochage de la lame 20 et/ou de la vertèbre 15 sur le corps 18, ces embouts 24 étant situés à chacune des extrémités longitudinales du corps 18.

Le corps 18 du balai peut également être réalisé en deux parties qui sont disposées sensiblement bout à bout et raccordées l'une à l'autre par un organe 26 intermédiaire, ici un connecteur, qui fait partie du système de connexion 16. Ces parties peuvent être indépendantes l'une de l'autre ou liées ensemble par une partie médiane du corps 18, définie par une découpe partielle du corps 18. Dans ce cas, la lame 20 est généralement rapportée sur le corps longitudinal 18.

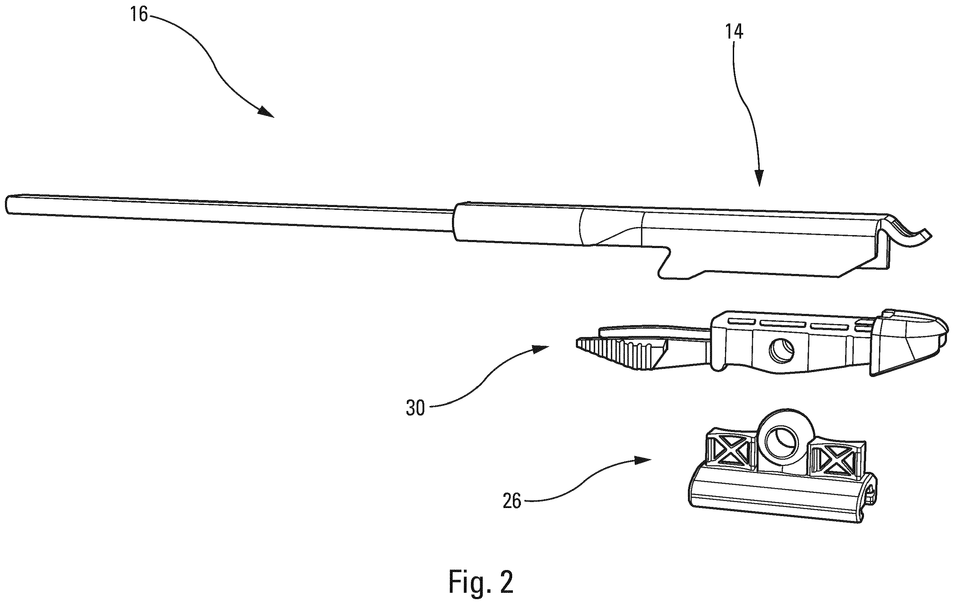

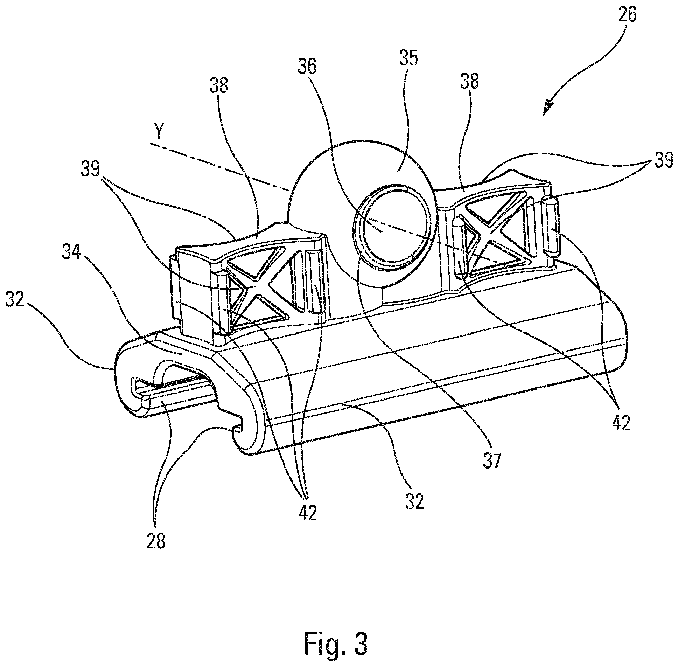

On se réfère maintenant aux figures 2 à 5. L'organe 26 selon l'invention, dit premier organe, qui est ici un connecteur, est généralement fixé au balai entre les deux parties du corps 18 et peut comprendre des moyens de liaison à ces parties. Le connecteur 26 peut aussi comprendre des moyens de fixation sur la ou les vertèbres 15 de rigidification du balai. Il peut ainsi comprendre des griffes inférieures 28 définissant des rainures longitudinales de réception, en général par coulissement, de parties d'extrémité longitudinales latérales de la ou des vertèbres 15, comme cela est visible en figure 3. L'organe 26 est de préférence configuré pour être fixé à demeure au balai d'essuyage 12.

Le système de connexion 16 comprend en outre un second organe 30, ici un adaptateur, qui est configuré pour être solidarisé au bras d'essuie-glace 14 et qui est monté sur le premier organe 26 de façon à garder au moins un degré de liberté en pivotement autour d'un axe de rotation Y qui est un axe transversal sensiblement perpendiculaire à l'axe longitudinal du balai d'essuyage 12. Ce degré de liberté autorise un pivotement du balai d'essuyage 12 vis-à-vis du bras d'essuie-glace 14 et permet ainsi au balai 12 de suivre la courbure du pare-brise lors de ses déplacements.

Ce degré de liberté est obtenu grâce à des moyens de rotation du premier organe 26 qui sont configurés pour coopérer avec des moyens complémentaires du second organe 30 pour définir ledit axe de rotation Y.

Selon l'invention, les moyens de rotation du premier organe 26 comprennent une seule et unique liaison rotule et non pas un axe physique de forme cylindrique, ou une pluralité de liaisons rotules comme dans la technique antérieure.

Le premier organe ou connecteur 26 des figures 1 à 5 a une forme générale allongée dans la direction longitudinale du balai d'essuyage 12. Il comprend deux parois latérales inférieures 32 reliées entre elles à leur extrémité supérieure respective par une paroi transversale 34 sensiblement perpendiculaire aux extrémités latérales des parois 32. Les parois 32, 34 ont ici une forme allongée en direction longitudinale. Les parois 32 portent ou comprennent les griffes 28 précitées.

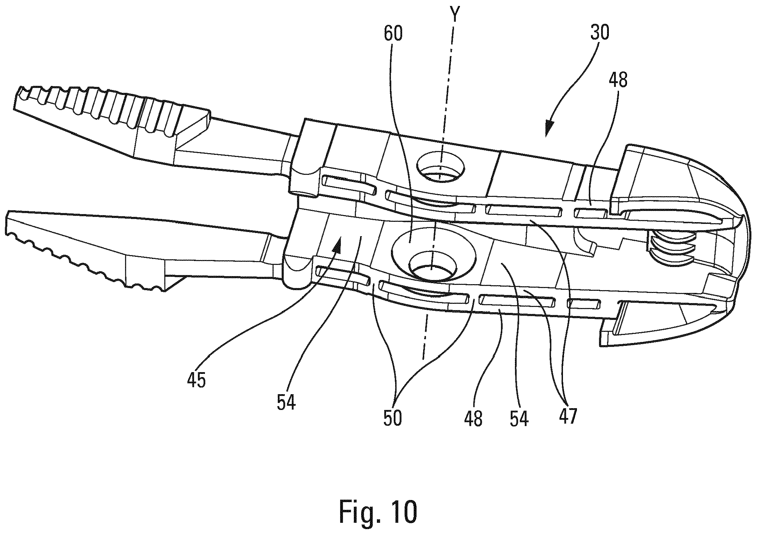

Le premier organe 26 comprend une liaison rotule de forme au moins partiellement sphérique, ellipsoïdale ou ovoïdale, qui est ici formée par un corps sphérique 35, ce corps 35 étant destiné à être engagé, de préférence par encliquetage élastique, dans un évidement 60 (visible en figure 10) de forme complémentaire de l'adaptateur 30.

Le corps sphérique 35 est ici venu de matière de la paroi 34, et se situe sensiblement au milieu de la partie supérieure du connecteur 26.

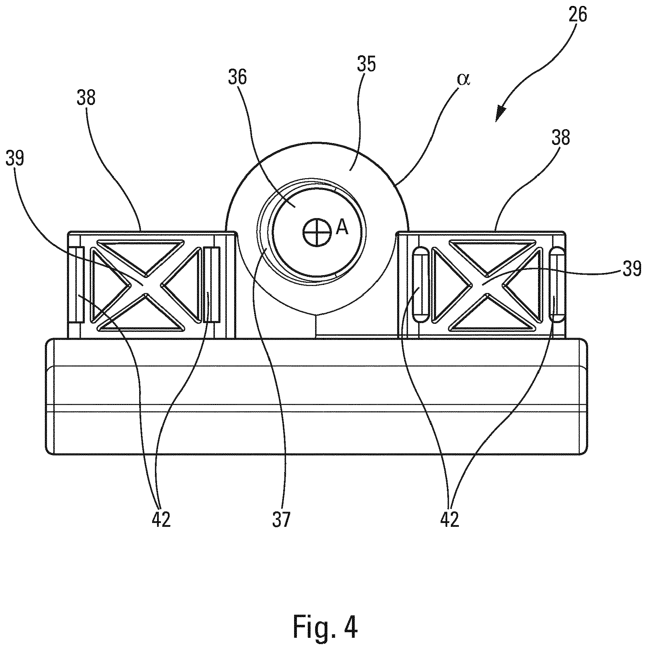

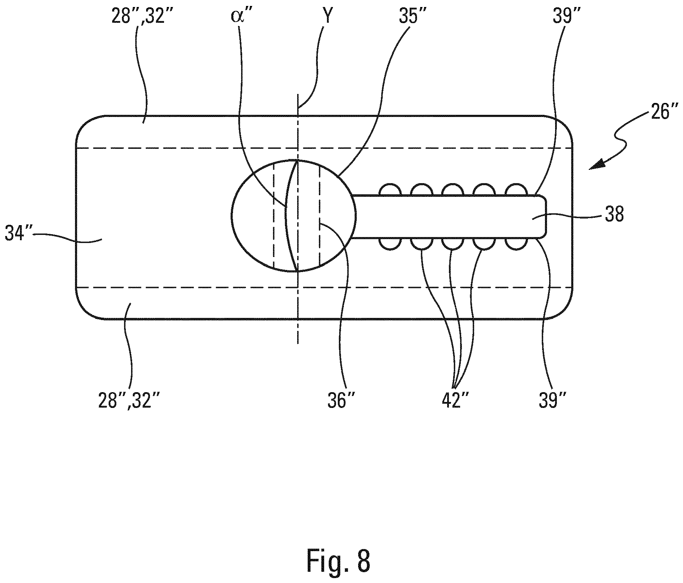

Comme visible dans le premier mode de réalisation et notamment en figure 4, le corps 35 définit ici une portion de sphère de centre A. Le corps 35 a en section une étendue angulaire α de 180° autour du centre A, délimitée en partie par les faces supérieures des moyens de blocage et de guidage 38 décrits ci-après. Cette étendue angulaire pouvant être mesurée dans un plan transversal médian comprenant l'axe Y (comme représenté sur la figure 8 qui illustre une variante de réalisation du premier organe selon l'invention), ou bien mesurée dans un plan longitudinal médian perpendiculaire à l'axe Y, comme illustré sur les figures 4-6.

Le corps 35 comprend ici un orifice 36 traversant qui s'étend le long de l'axe Y. Cet orifice 36 a une forme sensiblement cylindrique et est configuré pour recevoir une tige cylindrique d'un bras lorsque ce dernier est du type à verrouillage latéral, par exemple de type « Side-Lock » bien connu de l'homme du métier, et mieux décrit dans la demande US6553607 BA.

Les moyens 38 de blocage et de guidage comprennent au moins un, et préférablement deux blocs venus de matière de la paroi supérieure 34. Ces blocs, qui sont sensiblement parallélépipédiques, s'étendent vers le haut à l'avant et à l'arrière du corps 35, et comprennent chacun deux faces latérales 39. Les faces latérales 39 comprennent des protubérances 42 destinés à coopérer par glissement avec des moyens 54 correspondants du second organe 30 (visibles sur la figure 10) pour d'une part autoriser et guider le pivotement du premier organe 26 vis-à-vis du second organe autour de l'axe Y, et d'autre part, coopérer par appui ou butée avec les moyens 54 correspondants du second organe 30 pour limiter voire empêcher des déplacements parasites du premier organe 26 vis-à-vis du second organe autour du centre A, tels que des déplacements autour de l'axe longitudinal du balai par exemple.

Les moyens 38 et le corps 35 sont ici alignés longitudinalement, l'un derrière l'autre dans le plan longitudinal médian.

L'assemblage du balai d'essuyage 12 sur le bras d'essuie-glace 14 peut être réalisé simplement en présentant le connecteur 26 solidarisé au balai 12 directement sous l'adaptateur 30 solidarisé au bras 14, puis en déplaçant en translation le connecteur vers l'adaptateur dans une direction sensiblement perpendiculaire à l'axe longitudinal du balai, jusqu'à ce que le corps 35 s'engage par encliquetage élastique dans les moyens complémentaires 60 de l'adaptateur 30 (visibles sur la figure 10) et que les moyens 38 s'engagent dans le logement 45 de l'adaptateur 30.

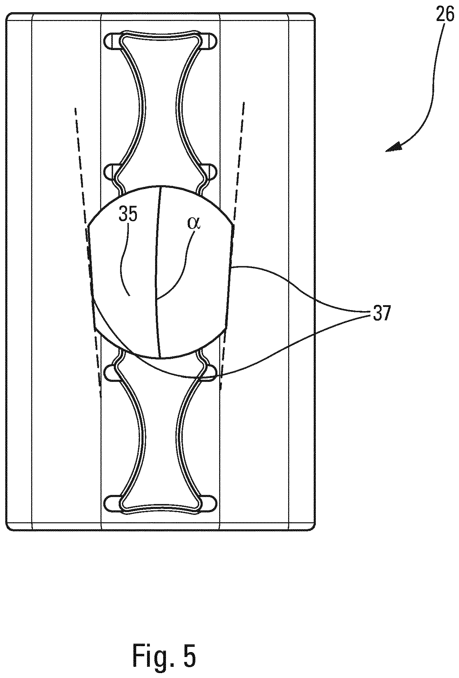

La figure 5 représente une vue schématique de dessus du premier organe 26 du premier mode de réalisation de l'invention. Comme visible sur cette figure et les figures 3 et 4, l'orifice 36 est de préférence délimité sur chaque face latérale du corps 35 par une bordure périphérique comprenant un méplat 37. Chaque méplat 37 est disposé de façon à ce que la largeur du corps sphérique 35 s'accroisse de l'avant vers l'arrière du premier organe 26, au niveau de l'orifice 36. De cette façon, le premier organe 26 peut facilement être assemblé avec le second organe 30, par un mouvement de translation linéaire du corps sphérique 35 à l'intérieur du second organe 30, jusqu'à encliquetage élastique du corps 35 dans des moyens complémentaires 60 (visibles en figure 10) du second organe 30. La largeur réduite du côté avant du corps sphérique 35 (visibles en figure 5) vise donc à faciliter l'introduction de ce dernier dans le second organe 30. La présente invention n'est cependant pas limitée à un tel mode de réalisation et il est alternativement possible d'avoir un premier organe 26 qui soit symétrique par rapport à un plan vertical médian perpendiculaire à l'axe longitudinal du premier organe 26, c'est-à-dire symétrique par rapport à un plan comprenant l'axe de rotation Y.

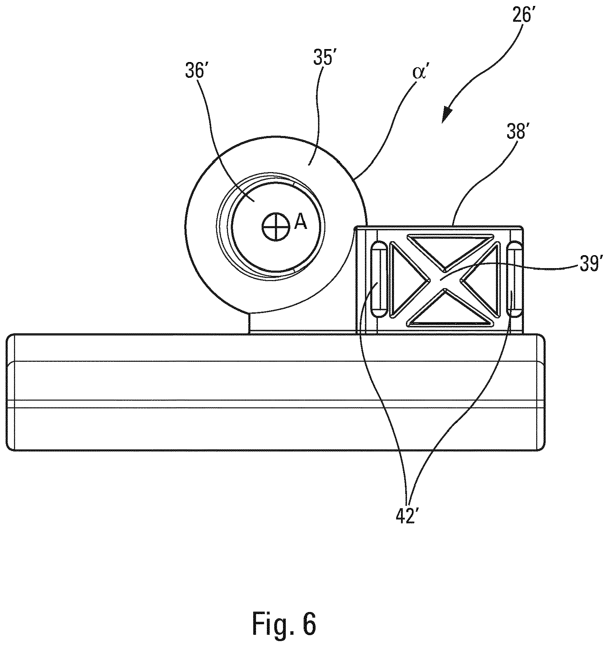

La figure 6 représente une autre variante de réalisation du premier organe 26. Selon cette variante, l'organe 26' diffère des figures 2 à 5 en ce que les moyens 38' de blocage et de guidage ne comprennent qu'un unique bloc en partie arrière de l'organe 26', ce bloc étant ici sensiblement parallélépipédique. Du fait de l'absence d'un bloc à l'avant de l'organe 26', le corps 35' peut ici avoir une étendue angulaire α' autour du centre A qui est nettement supérieure à celle de l'organe 26 des figures 1 à 5, par exemple ici d'environ 250°.

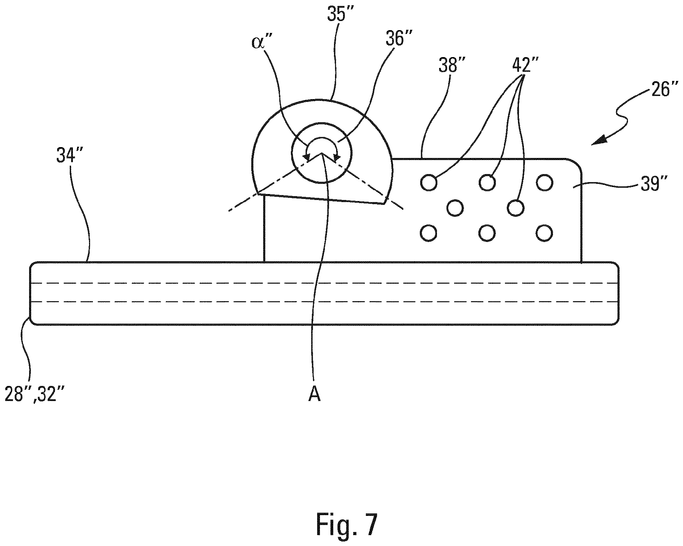

Les figures 7 et 8 représentent une encore autre variante de réalisation du premier organe 26. Comme visible en figure 8, l'organe 26" comprend un corps 35" de forme ovoïdale et les moyens 38" de blocage et de guidage comprennent un unique bloc 38" à l'arrière du corps 35". Ce bloc 38" comprend sur ses faces latérales des protubérances 42" en forme de plots ou demi-disques, configurés pour venir en appui sur les parois intérieures du second organe 30, afin de limiter voire empêcher des déplacements parasites du connecteur 26" vis-à-vis de l'adaptateur 30 autour du centre A, tels que des déplacements autour de l'axe longitudinal du balai par exemple. En outre, la surface des protubérances 42" en contact avec le second organe 30 est suffisamment faible pour ne pas créer de trop grandes forces de frottement entre le bloc 38" et l'organe 30, ce qui gênerait la rotation du second organe 30 vis-à-vis du premier organe 26. La présente invention n'est cependant pas limitée à un tel mode de réalisation et il est alternativement possible d'avoir un ou des blocs dont les faces latérales 39" sont dépourvues de protubérances 42", et sont par exemple planes.

Les moyens 38" de blocage et de guidage portent le corps 35" qui est relié directement à une de leurs extrémités longitudinales.

L'assemblage du balai d'essuyage 12 sur le bras d'essuie-glace 14 peut être réalisé simplement comme décrit dans ce qui précède.

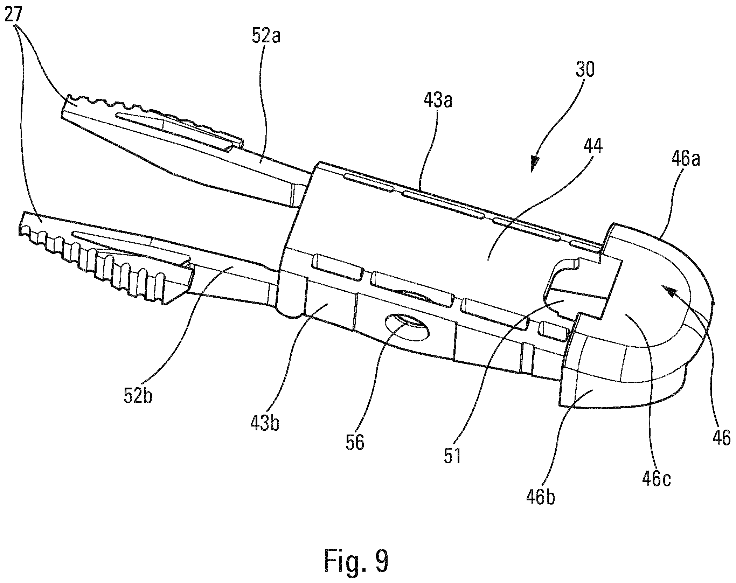

La figure 9 représente le second organe utilisé dans l'invention.

Dans le premier mode de réalisation décrit aux figures 1-5 et 9-11, le second organe 30 est un adaptateur de forme allongée le long de l'axe longitudinal du balai. Il comprend un corps comportant deux parois latérales 43a, 43b sensiblement parallèles entre elles et à l'axe A, et à distance l'une de l'autre. Ces parois 43a, 43b sont reliées entre elles à leurs extrémités supérieures par une paroi transversale supérieure 44 sensiblement perpendiculaire aux parois 43a, 43b. Cette paroi transversale supérieure 44 peut également être appelée base du second organe ou adaptateur 30. Les parois latérales et transversale 43a, 43b et 44 ont ici une forme allongée en direction longitudinale.

Les parois latérales et transversale 43a, 43b, 44 de l'adaptateur 30 définissent entre elles un espace longitudinal ou logement 45 dans lequel est destiné à être monté le corps sphérique, ellipsoïdal ou ovoïdal 35 du premier organe 26. Les parois 43a, 43b sont ici du type à double peau et comportent chacune deux peaux, respectivement interne 47 et externe 48 (visibles en figure 10), parallèles et à distance transversale l'une de l'autre. Les peaux sont reliées ensemble par des nervures rectilignes transversales 50, comme visible en figure 10.

Le corps de l'adaptateur 30 est relié à une première de ses extrémités longitudinales à un carénage ou capotage, aussi appelé casquette ou tête 46. Cette tête 46 a une dimension latérale supérieure à celle du corps de l'adaptateur et une hauteur également supérieure à celle du corps. Les parois latérales 43a, 43b du corps de l'adaptateur 30 sont ainsi en retrait ou décalées par rapport à des faces latérales externes 46a, 46b de la tête, et sa paroi supérieure 44 est en retrait ou décalée par rapport à une face supérieure externe 46c de la tête.

Comme visible en figure 9, la paroi supérieure 44 du corps de l'adaptateur 30 comprend en outre un orifice supérieur 51 d'engagement d'une languette du bras « Pinch Tab » mentionné ci-dessus. Cet orifice supérieur 51 est ici formé en partie dans la tête 46, à l'extrémité arrière de celle-ci, et en partie dans la paroi supérieure 44, à l'extrémité avant de celle-ci. L'orifice 51 a une forme générale par exemple carrée ou rectangulaire, formée par exemple par deux indentations en forme de U, une première indentation en forme de U étant sur la casquette 46 et faisant face à une deuxième indentation en forme de U située sur le la paroi supérieure 44.

Les parois latérales 43a, 43b du corps se prolongent vers l'arrière de l'adaptateur 30, par des pattes 52a, 52b élastiquement déformables, et qui s'étendent longitudinalement. Chaque paroi latérale 43a, 43b est reliée à une patte 52a, 52b, ces pattes 52a, 52b étant parallèles ou inclinée l'une par rapport à l'autre, et symétriques par rapport à un plan longitudinal médian, sensiblement vertical, c'est-à-dire perpendiculaire à la paroi supérieure 44 de l'adaptateur. Les extrémités libres des pattes 52a, 52b, qui sont situées du côté opposé à la tête 46, portent chacune un bouton poussoir latéral 27 en saillie. Chaque patte 52a, 52b porte ainsi un bouton poussoir 27. Les déformations élastiques des pattes 52a, 52b ont ici lieu dans un plan longitudinal sensiblement horizontal, c'est-à-dire sensiblement parallèle à la paroi supérieure 44. Les pattes 52a, 52b peuvent être rapprochées l'une de l'autre par déformation élastique. Les boutons poussoirs 27 sont conformés pour coopérer avec des encoches du bras « Pinch Tab », tel que décrit dans le document EP1565359 A1.

Les parois latérales 43a, 43b comprennent chacune un orifice 56 traversant. Les orifices 56 des parois 43a, 43b sont sensiblement coaxiaux et définissent ici l'axe Y de pivotement de l'adaptateur 30 sur le connecteur 26, et donc du balai d'essuyage 12 vis-à-vis du bras d'essuie-glace 14. Les orifices 56 sont ici à section circulaire. Les orifices 56 débouchent à leurs extrémités latérales externes sur les faces externes des parois 43a, 43b, respectivement, et à leurs extrémités latérales internes dans le logement 45.

Comme cela est visible sur la figure 9, les faces latérales internes en regard des parois latérales 43a, 43b comprennent des cavités 60. Chaque paroi latérale 43a, 43b comprend une cavité 60, les cavités 60 étant ici en regard l'une de l'autre et s'étendant chacune dans une direction vers l'intérieur des parois latérales 43a, 43b, c'est-à-dire en direction de l'espace séparant les deux peaux internes 47 et externes 48 mentionnées ci-dessus. Les cavités 60 sont symétriques par rapport à un plan longitudinal médian de l'adaptateur, perpendiculaire à la paroi supérieure 44. Chaque cavité 60 présente également un plan de symétrie passant par l'axe Y.

Dans l'exemple des figures 9 à 11, les cavités 60 du second organe 30 présentent une forme complémentaire de la rotule de forme partiellement sphérique du premier organe 26 des figures 2-6.

Le cas échéant, ces cavités 60 seront respectivement de forme concave au moins partiellement ellipsoïdale ou ovoïdale complémentaire à la forme du corps 35, si celle-ci est ellipsoïdale ou ovoïdale.

Chaque cavité 60 est ici trouée et comprend notamment un trou traversant. Ce trou est ici formé par un des orifices 56 précités. Chaque cavité 60 est ainsi située sur la peau interne 47 de la paroi latérale 43a ou 43b de sorte à être traversée par l'orifice 56 de cette paroi.

L'axe de chaque orifice 56, qui est confondu avec l'axe Y, est également confondu avec l'axe de la cavité 60 correspondante, si bien que les orifices sont centrés vis-à-vis du corps 35. Chaque cavité 60 a un diamètre extérieur qui représente environ 60 à 80% de la hauteur de la paroi latérale 43a, 43b correspondante, mesurée dans une direction sensiblement verticale perpendiculaire à la paroi supérieure 44.

Les parois latérales 43a, 43b du corps de l'adaptateur 30 comprennent en outre sur leurs faces latérales internes des moyens 54 en saillie qui définissent des faces d'appui en direction transversale. Au moins certains de ces moyens 54 en saillie sont configurés pour être en contact avec les protubérances 42 mentionnées ci-dessus ou alternativement avec les faces latérales 39, qui peuvent être notamment planes.

Les moyens en saillie comprennent ici des bandes de matière 54 en saillie sur les faces latérales internes des parois latérales 43a, 43b. Les bandes de matière ont une forme allongée et s'étendent longitudinalement entre les bords longitudinaux inférieurs et supérieurs des parois 43a, 43b.

Les bandes de matière 54 définissent des faces d'appui sensiblement parallèles. Ces faces d'appui sont ici sensiblement parallèles aux faces latérales externes des parois 43a, 43b ainsi qu'à l'axe longitudinal de l'adaptateur 30.

L'adaptateur 30 décrit ci-dessus est avantageusement unitaire, c'est-à-dire constitué par une même matière synthétique, plastique. Il peut ainsi être fabriqué au cours d'une unique opération de moulage, notamment par injection.

L'adaptateur 30 est fixé au connecteur 26 grâce au corps 35 et aux cavités 60 qui forment des moyens de fixation de l'adaptateur 30 au connecteur 26, et de pivotement de l'adaptateur 30 vis-à-vis du connecteur 26. Les moyens de fixation sont du type à encliquetage élastique, les cavités 60 de l'adaptateur 30 étant destinées à coopérer par encliquetage élastique avec le corps 35.

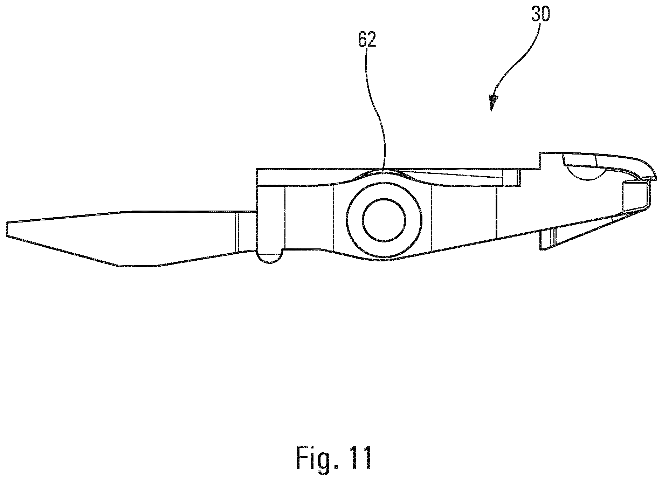

Comme cela est visible en figure 11, la paroi supérieure 44 du second organe ou adaptateur 30 comprend une cavité 62 dans laquelle peut être reçue une partie supérieure du corps sphérique 35. Cette cavité de réception permet de réduire la hauteur de l'ensemble formé par les premier 26 et second 30 organes lorsqu'ils sont assemblés l'un avec l'autre.

Le connecteur 26 est agencé pour être rendu solidaire, par exemple par sertissage, du balai d'essuyage 12. Le connecteur 26 peut également assurer une fonction de transport et de distribution d'un liquide de lavage du pare-brise du véhicule.

## Revendications

1. Organe (26, 26', 26") pour un système (16) de connexion d'un balai (12) à un bras (14) d'essuie-glace, cet organe, dit premier organe, étant configuré pour être solidarisé audit balai (12) ou audit bras (14) et comportant des moyens d'articulation (35, 35', 35") configurés pour coopérer avec des moyens d'articulation complémentaires (60) d'un autre organe (30) du système (16) de connexion, dit second organe, pour définir au moins un moyen de fixation et de pivotement autour d'un axe (Y) de rotation dudit premier organe (26, 26', 26") vis-à-vis dudit second organe (30), lesdits moyens d'articulation (35, 35', 35") dudit premier organe (26, 26', 26") comprenant une liaison rotule de forme au moins partiellement sphérique, ellipsoïdale ou ovoïdale, ledit premier organe (26, 26', 26") étant **caractérisé en ce qu'**il ne comprend qu'une seule et unique liaison rotule de forme au moins partiellement sphérique, ellipsoïdale ou ovoïdale.

2. Organe (26, 26', 26") selon la revendication 1, dans lequel ladite liaison rotule de forme au moins partiellement sphérique, ellipsoïdale ou ovoïdale (35, 35', 35") a en section une étendue angulaire (α, α', α") supérieure à 200°, voire à 250°, autour d'un centre (A) de ladite rotule.

3. Organe (26, 26', 26") selon la revendication 2, dans lequel ladite liaison rotule de forme au moins partiellement sphérique, ellipsoïdale ou ovoïdale (35, 35', 35") comprend un orifice (36, 36', 36") traversant s'étendant autour dudit axe de pivotement (Y).

4. Organe (26, 26', 26") selon l'une des revendications précédentes, comprenant des moyens de guidage (38, 38', 38", 39, 39', 39", 42, 42', 42") configurés pour coopérer avec ledit second organe (30) afin de guider le second organe (30) en rotation autour dudit axe (Y), lesdits moyens de guidage étant de préférence indépendants des moyens d'articulation (35, 35', 35").

5. Organe (26, 26', 26") selon l'une des revendications précédentes, comprenant des moyens de blocage (38, 38', 38", 39, 39', 39", 42, 42', 42") configurés pour coopérer avec ledit second organe (30) afin d'autoriser seulement des déplacements en rotation autour dudit axe (Y), lesdits moyens de blocage étant de préférence indépendants des moyens d'articulation (35, 35', 35").

6. Organe (26, 26', 26") selon la revendication 5, dans lequel lesdits moyens de guidage et/ou de blocage (38, 38', 38", 39, 39', 39", 42, 42', 42") comprennent au moins une paroi longitudinale (39) sensiblement perpendiculaire audit axe de rotation (Y).

7. Organe (26, 26', 26") selon la revendication 6, dans lequel ladite paroi longitudinale comprend ou porte des protubérances (42) d'appui et de glissement faisant saillie, et configurés pour coopérer avec ledit second organe (30).

8. Système (16) de connexion d'un balai (12) à un bras (14) d'essuie-glace, ce système (16) comprenant un premier organe (26, 26', 26") selon l'une quelconque des revendications 1 à 7 et un second organe (30) tel que défini dans l'une quelconque des revendications 1 à 7.

9. Système de connexion (16) selon la revendication 8, dans lequel ledit premier organe est un connecteur (26, 26', 26") configuré pour être solidarisé audit balai (12).

10. Système de connexion (16) selon la revendication 8 ou 9, dans lequel les moyens d'articulation (35, 35', 35") du premier organe (26, 26', 26") sont aptes à être montés dans des moyens complémentaires (60) du second organe (30) par encliquetage élastique.

11. Balai d'essuie-glace (12), **caractérisé en ce qu'**il comprend ou porte au moins un organe (26, 26', 26") selon l'une des revendications 1 à 7 ou un système (16) selon l'une des revendications 8 à 10.
